# EUROPEAN PATENT APPLICATION

(11) **EP 2 993 910 A1**
(43) Date of publication of application: **09.03.2016**
(21) Application number: 14306362.6
(22) Date of filing: 04.09.2014
(51) Int. Cl.: H04N 21/845, H04N 21/854, H04N 21/442, H04N 21/24, H04N 21/44, H04N 21/2343, H04L 29/06

(54) **Method and client terminal for receiving a multimedia content split into at least two successive segments, and corresponding computer program product and computer-readable medium.**

(71) Applicant: Thomson Licensing, 92130 Issy-les-Moulineaux (FR)
(72) Inventor: Houdaille, Remi, 35576 Cesson Sévigné (FR); Gouache, Stephane, 35576 Cesson Sévigné (FR); Taibi, Charline, 35576 Cesson Sévigné (FR)
(74) Representative: Browaeys, Jean-Philippe

(57) **Abstract**

The disclosure relates to a method for receiving a multimedia content, comprising:
- receiving (21) at least one fragment of a first representation of a segment;
- determining (22), by considering an available bandwidth along a transmission path between a client terminal and a server, the expected delivery time of all the following fragments of the first representation of said segment, and the expected delivery time of all the fragments of at least one alternative representation of said segment;
- selecting (23), by considering the expected delivery times, between receiving at least one subsequent fragment of the first representation of said segment; or receiving at least a first fragment of a second representation of said segment, said second representation belonging to said at least one alternative representation.

## Description

### 1. Technical field

The present disclosure relates generally to the domain of the adaptive streaming technology over, for instance but not exclusively, HTTP (HyperText Transfer Protocol) and, in particular, to the reception, by a client terminal, of a multimedia content split into segments.

The present disclosure is particularly adapted for the reception of live events in streaming.

### 2. Background art

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Adaptive streaming over HTTP (also called multi-bit-rate switching or HAS) is quickly becoming a major technology for multimedia content distribution. Among the HTTP adaptive streaming protocols which are already used, the most famous are the HTTP Live Streaming (HLS) from Apple, the Silverlight Smooth Streaming (SSS) from Microsoft, the HTTP Dynamic Streaming (HDS) from Adobe, the Dynamic Adaptive Streaming over HTTP (DASH) developed by 3GPP and MPEG (standardized as ISO/IEC 23009-1:2012).

When a client terminal wishes to play an audiovisual content (or A/V content) in adaptive streaming, it first has to get a file describing how this A/V content might be obtained. This is generally done through the HTTP protocol by getting a description file, so-called manifest, from an URL (Uniform Resource Locator), but can be also achieved by other means (e.g. broadcast, e-mail, SMS and so on). The manifest - generated in advance and delivered to the client terminal by a remote server - basically lists the available representations (also called instances or versions) of such an A/V content (in terms of bit-rate, resolution and other properties). A representation is associated with a given quality level (bit-rate).

The whole data stream of each representation is divided into segments (also called chunks) of equal duration (accessible by a separate URL) which are made such that a client terminal may smoothly switch from one quality level to another between two segments. As a result, the video quality may vary while playing but rarely suffers from interruptions (also called freezes).

At the client side, the segments are selected based on a measure of the available bandwidth of the transmission path. In particular, a client terminal usually requests the representation of a segment corresponding to a bit-rate encoding and thus a quality compliant with the measured bandwidth. The available bandwidth, also called network bandwidth or bandwidth throughout the description, refers to the network throughput, in bit/s.

The client terminal rendering the content thus has to make its own estimation of the achievable throughput, and chooses representations such that the segments can be downloaded fast enough to be rendered at their presentation time, while trying at the same time to maximize the quality.

According to HTTP adaptive streaming technology, the client terminal has to evaluate continuously the available bandwidth for content reception, and to determine an appropriate throughput before requesting a representation of a segment, so that the video quality is maximized, while the risk of receiving a segment too late for continuous display is minimized.

However, since the available bandwidth could change when the transmission path between a remote server and the client terminal varies (Internet throughput is not stable), this is not an easy trade-off.

More specifically, when the bandwidth drops, the requested time to download a representation of a segment, corresponding to a specific bit-rate encoding, could increase, and could lead to an interruption in the rendering process of the A/V content.

As an example, we consider segment duration of 10 seconds and representations of a segment at 200, 400, 600, 1200, 1800, 2500, 4500, 6500 and 8500 kbits/s (figures recommended by Apple for HLS), and a stable bandwidth of 8.5 Mbit/s at the beginning of the transmission. The client terminal can request one representation of a segment at 8500kbit/s every 10 seconds. We suppose that the bandwidth is suddenly divided by 2 (4250 kbit/s). If this drop in bandwidth happens just after the request for a representation of a segment at 8500kbit/s, this representation will be downloaded in 20 seconds, so we get late by one segment.

To overcome the freeze of the rendering of the content, it is thus possible to use a buffer in which several segments are downloaded in advance, so that more margin is available to load a new segment when bandwidth drops.

However, long buffers introduce delays for the end user. In case of live events, these delays are undesirable, so the use of short buffers is preferred.

Moreover, once a request for receiving a segment has been sent to a server through the HTTP protocol, the only way to interrupt the reception is to close the underlying TCP connection.

However, such closing of the connection requires the restarting of a new TCP session, which is inefficient and time consuming.

As Internet throughput is not stable and can vary in short periods of time, it has been proposed to make some averaging of the perceived bandwidth to avoid reacting too strongly to local changes. Then, if a bandwidth drop occurs near the end of a segment, its impact on the computed average is small.

However, based on this average, the client terminal will still choose a representation higher than the new bandwidth. If the bandwidth does not come back to a higher level, this decision will cumulate a download delay through the segment, this requiring again a large buffer to resist.

The present disclosure overcomes at least one of the above-mentioned shortcomings.

### 3. Summary

The present disclosure relates to a method for receiving a multimedia content by a client terminal, from at least one server, wherein the multimedia content is split into at least two successive segments of a first duration and wherein a segment is associated with at least two representations.

According to an embodiment of the disclosure, the method comprises:
- receiving at least one fragment of a first representation of a segment, each representation of said segment being split into at least two successive fragments of a second duration (with the second duration shorter than the first duration);
- determining, by considering an available bandwidth along a transmission path between the client terminal and one of the at least one server:
   ▪ the expected delivery time of all the following fragments of the first representation of said segment, and
   ▪ the expected delivery time of all the fragments of at least one alternative representation of said segment;
- selecting, by considering the expected delivery times, between:
   ▪ receiving at least one subsequent fragment of the first representation of said segment; or
   ▪ receiving at least a first fragment of a second representation of said segment, said second representation belonging to said at least one alternative representation.

The present disclosure thus proposes a new technique for receiving a multimedia content, wherein the multimedia content is split into segments and wherein a client terminal could request parts of a segment (or parts of a representation of a segment), for example in bytes, instead of the entire segment.

As a consequence, the method according to the disclosure proposes to load fragments of a representation of a segment, instead of the whole representation of the segment, in order to decide if it is better to load other fragments of the same representation of the segment, or if it better to load another representation of the segment at a highest or a lowest bit-rate, in case of increase or decrease of the available bandwidth.

Indeed, some of the drawbacks mentioned above are due to the fact that decisions on the reception of a representation are taken for a whole segment duration, whereas the bandwidth along the transmission path could vary in very short periods of time. Consequently, if the bandwidth is too narrow, the client terminal pay long delay for the reception of the segments, and if the bandwidth is too large, the client terminal does not optimize the bit-rate for the reception of the segments.

The method according to an embodiment of the disclosure may thus allow the client terminal to work on a smaller time base compared to prior art methods. As a consequence, when a decrease (respectively increase) in the bandwidth is detected, it can be decided to "abort" the downloading of the current representation of the segment, and start to load a new representation of the segment with a lower (respectively higher) bit-rate, that will make the segment ready sooner (respectively with a higher quality) than if there is no change.

In particular, the method according to the disclosure may comprise sending at least one byte ranges request to said at least one server, in order to receive said at least one fragment.

This can be done with current HTTP implementations, especially HTTP/1.1 option, by requesting byte ranges instead of requesting the full segment (for example reducing the expected load time of a fragment to 500ms).

It should be noted that at least one of said byte ranges request can be pipelined. Such a pipelining could be useful because the number of requests for fragments of a segment compared to one request for the segment implies a cumulated delay of N times the RTT, instead of one time the RTT, with N the number of fragments per segment.

According to an embodiment of the disclosure, the method may comprise determining an estimate of said available bandwidth at a time scale corresponding to the second duration.

In other word, the available bandwidth may be estimated at the fragment level.

According to another embodiment of the disclosure, the method comprises determining an estimate of said available bandwidth at a time scale corresponding to the first duration.

In other word, the available bandwidth is estimated at the segment level.

In particular, two bandwidth estimates could be determined, one at the fragment level and one at the segment level. Then, at the start of a segment, the representation may be chosen according to the more averaged estimation, while when loading the fragments of the segment, the client terminal can consider the short term variations.

In particular, said estimate or estimates may be each determined either periodically, or after receiving at least one fragment, or after receiving at least one segment, or after detecting a change in the transmission path.

According to a first example, the second representation is associated with a second bit-rate lower than a first bit-rate associated with the first representation, if there is a decrease in the available bandwidth.

The disclosure may thus enable to improve robustness when the bandwidth drops severely.

According to a second example, the second representation is associated with a second bit-rate greater than a first bit-rate associated with the first representation, if there is an increase in the available bandwidth.

The disclosure may thus enable to get faster quality improvement when the bandwidth goes up quickly. A client terminal can then change its initial decision for a first representation of a segment and select a higher quality representation (thus a higher bit-rate) at any fragment boundary.

This can be particularly useful at the start of the streaming session. Indeed, when loading the very first segment, the client terminal may not have at its disposal a correct estimate of the bandwidth.

According to prior art, the client terminal has to select a low bit-rate to ensure the session can start correctly. But then it may discover that a much higher quality can be achieved and has to wait the duration of a segment to change to a second representation.

With at least one embodiment of the disclosure, the client can discover on the first fragment(s) the available bandwidth and decide to switch immediately to a better bit-rate, so that the video will start with an optimal quality.

According to an embodiment of the disclosure, the selecting between receiving at least one subsequent fragment of the first representation or receiving at least a first fragment of the second representation may also consider the playback duration of a current content of a buffer of said client terminal.

In other words, the client terminal can check whether the buffer will be consumed before deciding to continue to receive the first representation of a segment or change to a second representation of the segment.

According to an embodiment of the disclosure, the determination of the expected delivery times and the selection between receiving at least one subsequent fragment of the first representation or receiving at least a first fragment of the second representation can be implemented fragment by fragment.

It is thus possible to decide at each fragment whether it is better to switch to another representation, if there is an increase or a decrease of the bandwidth.

The present disclosure also concerns a client terminal for receiving a multimedia content from at least one server, wherein the multimedia content is split into at least two successive segments of a first duration, and wherein a segment is associated with at least two representations.

According to an embodiment of the disclosure, the client terminal comprises:
- a module configured to receive at least one fragment of a first representation of a segment, each representation of said segment being split into at least two successive fragments of a second duration;
- a module configured to determine, by considering an available bandwidth along a transmission path between the client terminal and one of the at least one server:
   ▪ the expected delivery time of all the following fragments of the first representation of said segment, and
   ▪ the expected delivery time of all the fragments of at least one alternative representation of said segment;
- a module configured to select, by considering the expected delivery times, between:
   ▪ receiving at least one subsequent fragment of the first representation of said segment; or
   ▪ receiving at least a first fragment of a second representation of said segment, said second representation belonging to said at least one alternative representation.

Such a client terminal can be especially adapted to implement the receiving method described here above. It could of course comprise the different characteristics pertaining to the receiving method according to an embodiment of the disclosure, which can be combined or taken separately. Thus, the characteristics and advantages of the terminal are the same as those of the receiving method and are not described in more ample detail.

Another aspect of the disclosure pertains to a computer program product downloadable from a communication network and/or recorded on a medium readable by computer and/or executable by a processor comprising software code adapted to perform a method for receiving a multimedia content wherein the software code is adapted to perform the steps of the receiving method described above.

In addition, the present disclosure concerns a non-transitory computer readable medium comprising a computer program product recorded thereon and capable of being run by a processor, including program code instructions for implementing the steps of the receiving method previously described.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### 4. Brief description of the drawings

The disclosure will be better understood and illustrated by means of the following embodiment and execution examples, in no way limitative, with reference to the appended figures on which:
- Figure 1 is a schematic diagram of a Client-Server network architecture wherein the present disclosure might be implemented;
- Figure 2 is a flow chart illustrating the main steps of a method for receiving a multimedia content according to the disclosure;
- Figure 3 is a flow chart illustrating an example of general process of the disclosure;
- Figure 4 is a block diagram of an example of a client terminal implementing the method for receiving a multimedia content according to the example of Figure 3.

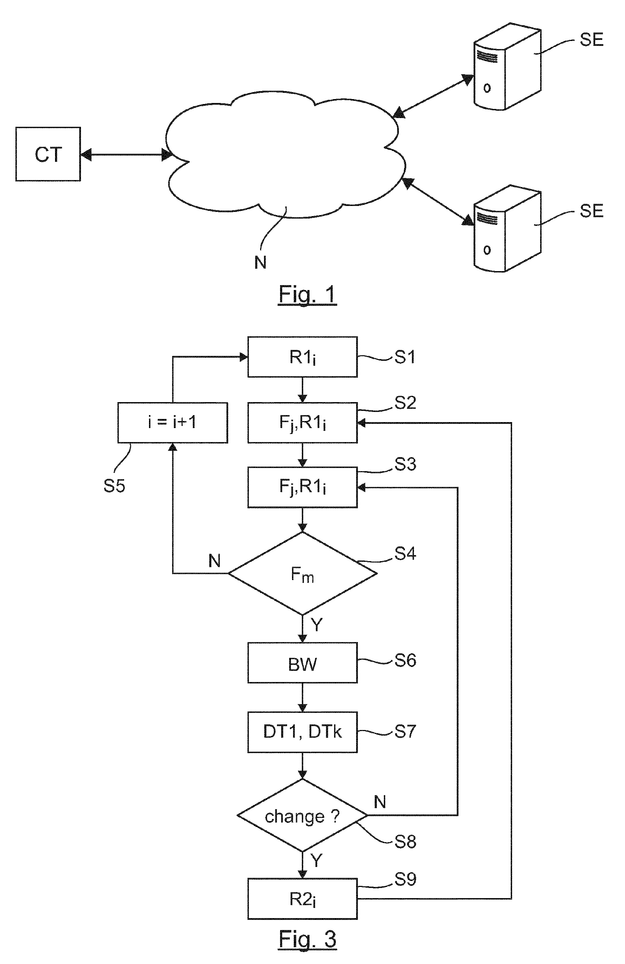

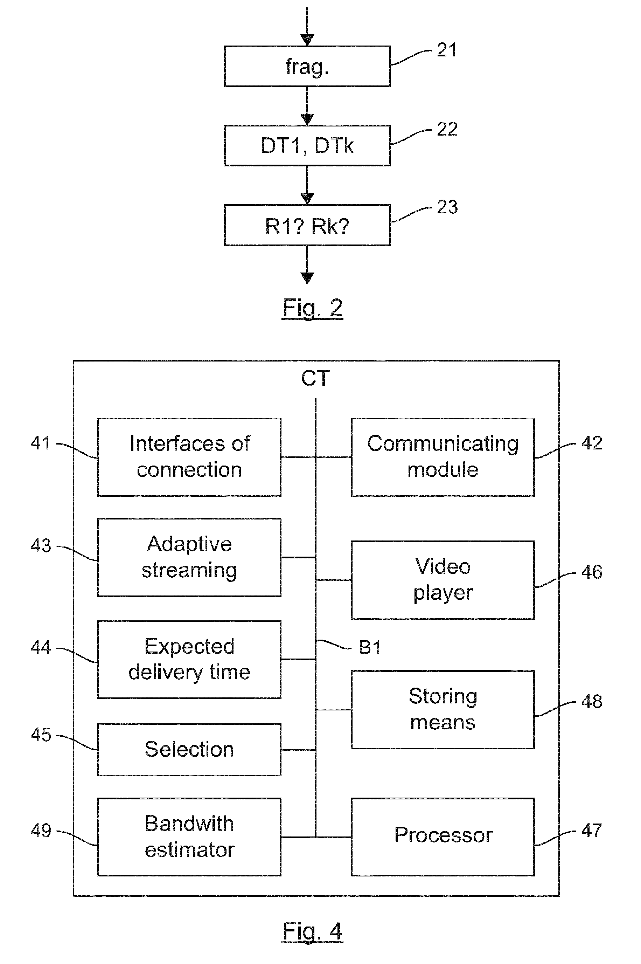

In Figures 1 and 4, the represented blocks are purely functional entities, which do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

### 5. Description of embodiments

It is to be understood that the figures and descriptions of the present disclosure have been simplified to illustrate elements that are relevant for a clear understanding of the present disclosure, while eliminating, for purposes of clarity, many other elements found in typical digital multimedia content delivery methods and systems.

According to a preferred embodiment, the present disclosure is depicted with regard to the HTTP adaptive streaming protocol (or HAS) and, in particular, with regard to MPEG-DASH. Naturally, the disclosure is not restricted to such a particular environment and other adaptive streaming protocol could of course be considered and implemented.

As depicted in Figure 1, the Client-Server network architecture, supported by one or several networks N (only one is represented in Figure 1), wherein the present disclosure might be implemented, comprises one or several client terminals CT (only one is represented in the Figure 1), and one or more HTTP servers SE. According to DASH, such servers SE are also named Media Origin. They generate for instance the media presentation description (or MPD), so called manifest. This is the source of content distribution: the multimedia content may come from some external entity and be converted to HAS format at the Media Origin.

The client terminal CT wishes to obtain a multimedia content from one of the HTTP servers SE. Said multimedia content is divided into a plurality of successive segments of a first duration (for example 10 s per segment). It is assumed that the multimedia content is available at different representations at a server SE. The client terminal may request a complete segment or parts of the segment, also called fragments, so as to retrieve the content fragment by fragment. The request for fragment of a segment can use for instance the well-known byte range request capability of the HTTP protocol. The client can thus download parts of a segment, targeting a second duration (for example 500ms of download duration per fragment). The HTTP server SE is thus able to deliver to the client terminal CT, using HTTP adaptive streaming protocol over one or more TCP/IP connections, segments or fragments of segments split according to the client request. The size of a fragment may be determined by the client terminal CT or by the server SE. The client terminal CT can decide to switch from a representation of a segment to another one, at the reception of each fragment.

The client terminal CT can be a portable media device, a mobile phone, a tablet or a laptop, a TV set, a Set Top Box, a game device or an integrated circuit. Naturally, the client terminal CT might not comprise a complete video player, but only some sub-elements such as the ones for demultiplexing and decoding the media content and might rely upon an external means to display the decoded content to the end user. In this case, the client terminal CT is a HAS aware video decoder, such as a set-top box.

In the following, it is assumed that a given client terminal CT sends a request on the network N to obtain at least one fragment of a first representation of a segment of a multimedia content.

The main steps implemented by the client terminal CT for receiving a multimedia content according to an embodiment of the disclosure are shown in Figure 2, and comprise:
- receiving (21), by the client terminal CT, at least one fragment of a first representation of a segment;
- determining (22), by considering the available bandwidth along a transmission path between the client terminal CT and one of the server SE:
   ▪ the expected delivery time DT1 of all the following fragments of the first representation of the segment, and
   ▪ the expected delivery time DTk of all the fragments of at least one alternative representation of the segment;
- selecting (23), by considering the expected delivery times, between:
   ▪ receiving at least one subsequent fragment of the first representation of the segment; or
   ▪ receiving at least a first fragment of a second representation of the segment, said second representation belonging to said at least one alternative representation.

As already mentioned, the disclosure thus relies on the reception of at least one fragment of a representation of a segment, instead of the reception of the whole representation of the segment.

As an example, we consider again a segment duration of 10 seconds and representations of a segment at 200, 400, 600, 1200, 1800, 2500, 4500, 6500 and 8500 kbits/s, with a stable bandwidth of 8.5 Mbit/s at the beginning of the transmission of an HTTP Adaptive Stream multimedia content. If we consider that a segment (or its representation) is divided in 20 parts, and if the bandwidth drops just after the beginning of the request (4250kbit/s), the client terminal can decide to load the representation of the segment corresponding to the bit-rate 2500kbit/s at time 0.5 second. Then, the client terminal gets the full segment 7.38 seconds after the initial request, so in advance of 2.62 seconds compared to the rendering time of the content. Targeting 2500kbit/s gives some advance to the client terminal as long as the bandwidth drop is before 3.5 seconds.

Figure 3 illustrates an example of the overall process implemented by the client terminal CT for receiving a multimedia content.

During step S1, the client terminal CT selects a first (or initial) representation of a segment i, also denoted as R1ᵢ, and sends a request to at least one server SE for at least one fragment of the first representation of the segment i. Such a request can use HTTP/1.1 option of requesting byte ranges.

At the beginning of a segment (i.e. for the first fragment of a segment), the representation of a segment can be chosen as usual.

Regarding the duration of the fragments, the number of fragments in a segment could be chosen to be larger than the expected worse bandwidth division the client wants to resist to. Indeed, one important point that improves robustness according to the disclosure is the reduction in the time scale of decision. The greater the number of fragments, the more robust the method is. When bandwidth is divided by N, the client will suffer a delay in reception of the current requested fragment equal to N times the duration of the fragment. The number of fragments could also be limited, so that the overhead of HTTP headers in the requests for each fragment is limited and/or the size of each fragment is several times the MTU ("maximum transmission unit") and/or the size of a fragment requires a download time larger than the RTT ("round-trip time").

According to this example, the byte ranges to be requested are also determined by dividing the segment size by the number N of fragments. The segment size can be obtained with an initial HTTP HEAD request on the full content of the segment, that will return the overall segment size.

At least one fragment of the first representation of the segment, denoted as Fⱼ, R1ᵢ, is received by the client terminal CT at step S2, and downloaded in a buffer of the client terminal CT at step S3.

If the fragment Fⱼ, R1ᵢ is the last fragment of the segment i (check S4), the client terminal CT considers the next segment i+1 (step S5) and return to step S1.

If the first fragment Fⱼ, R1ᵢ is not the last fragment of the segment i (check S4), the client terminal CT determines (step S6) an estimate of the available bandwidth along a transmission path between the client terminal CT and the server SE, at a time scale corresponding to the second duration, and possibly at a time scale corresponding to the first duration.

Bandwidth estimates according to the disclosure may be preferably adapted to the new time scale, so that changes in the bandwidth are seen quickly (faster than the segment duration). The estimate of the available bandwidth at the fragment level could be determined using a known algorithm, for example the one currently used to determine the available bandwidth at the segment level, by reducing the time scale. The bandwidth estimation parameters may allow the estimates to follow shortly the actual variations. Two parallel bandwidth estimates could be done, one at the fragment level and one at the segment level.

In particular, bandwidth estimates could be determined either periodically, or after receiving at least one fragment or at least one segment, or after detecting a change in the transmission path.

The client terminal CT then determines at step S7, by considering the available bandwidth, the expected delivery time DT1 of all the following fragments Fₘ, R1ᵢ, with *m* ∈ [*j* + 1, *N*] of the first representation of the segment i (i.e. the expected time delivery of the segment i if the client terminal keep loading the same representation R1ᵢ), and the expected delivery time DTk of all the fragments of at least one alternative representation of the segment i available at a server SE (i.e. the expected time delivery of the segment i if the client terminal aborts the loading of the current representation R1ᵢ and switches to another representation). There is one value of expected delivery time to compute for each representation available at the server SE for the segment i, that has a bit-rate lower than the estimated one in case of reduced bandwidth, or higher than the estimated one in case of increased bandwidth.

These computations are different because in the first case (i.e. the client terminal keeps loading the same representation R1ᵢ) the client terminal has already downloaded a part of the segment and continue the downloading, while in the second case (i.e. the client terminal aborts the loading of the current representation R1ᵢ and switches to another representation) the client terminal deletes the part of the segment previously downloaded and starts loading a new representation of the segment from scratch.

At check S8, the client terminal CT decides, by considering the expected delivery times DT1, DTk, whether it is better to receive at least one subsequent fragment Fⱼ₊₁ of the first representation R1ᵢ of the segment i (i.e. to continue with the same representation R1ᵢ of the segment i) or to receive at least a first fragment of a second representation R2ᵢ of the segment i (i.e. to switch to another representation of the segment i).

If the client terminal CT decides that it is better to receive at least one subsequent fragment Fⱼ₊₁ of the first representation R1ᵢ of the segment i, the algorithm goes back to step S3 for downloading the next fragment Fⱼ₊₁.

If the client terminal CT decides that it is better to receive at least a first fragment of a second representation R2ᵢ of the segment i, the client terminal selects (step S9) the new representation for the segment i, and the algorithm goes back to step S2 for receiving the first fragment of the second representation of the segment i, denoted as Fⱼ, R2ᵢ.

According to this example, the decision depends on the trade-off chosen by the application, between the size of the client terminal buffer and the video quality variations the end user will suffer. For example, in order to avoid freeze in the rendering, the buffer of the client terminal should preferably never be empty. Moreover, depending on the context of use, an application may decide to keep more margin in the buffer preservation, by choosing a longer buffer.

For example, such a decision could be made following the simplified algorithm:
- determining the expected time delivery DT1 of the segment i if the client terminal keeps loading the same first representation R1ᵢ. In other words, the client terminal determines the time to load the segment i without change, assuming bandwidth stays as is now;
   ∘ if DT1 is at most equal to the playing time duration of segments which are in the buffer (the client terminal checks if the buffer will be consumed), then the client terminal doesn't change its decision and continues to download the same representation;
   ∘ if DT1 is higher than the playing time duration of segments which are in the buffer, then determining the expected time delivery DTk of all the fragments of at least one alternative representation k of the segment i available at the server SE. The expected time delivery is determined on the whole segment;
      ▪ if DTk is at most equal to the playing time duration of segments which are in the buffer, deciding to switch to this representation k of the segment i. In other words, the client terminal checks whether the corresponding bit-rate of the representation k works without consuming the entire buffer. In case of reduced bandwidth, the client terminal can select the representation with the highest bit-rate below the estimated one, for which DTk is correct. This is the choice for best quality. Lower bit-rates will also ensure buffer protection but with lower content quality.

If decision to switch is taken, the client terminal starts the reception of a new representation of the segment, i.e. the reception of the segment with a new bit-rate.

In case of increased bandwidth, the computations for the evaluation of the different choices are similar to above, except that for higher rates we check the different options, regardless the fact that current download will finish in time. We then choose the highest rate that allows meeting the client terminal buffer constraints.

While prior art techniques propose to select a representation for a segment, then to load the entire segment, before being able to request another representation for the subsequent segment, it is thus possible according to this example of the disclosure to divide the segment loading into small parts of it, to make an estimation of the available bandwidth at a time scale corresponding to the fragments durations, and to decide at each fragment to switch to another representation of the segment, if this is advantageous after a decrease or an increase of bandwidth.

As a consequence, according to the disclosure, once a change of representation is decided, download of a new segment starts. The entire process of decision can be restarted with the new segment representation, and if the bandwidth increases or decreases, a new decision of representation change can be taken.

At least one embodiment of the disclosure thus allows more robustness to change in bandwidth in HTTP streaming adaptation. This helps avoiding video freezes while at the same time enables the use of a short buffer to minimize viewing delays.

According to one embodiment of the disclosure, pipelining could be used for the requests of fragments, as the size of the fragments can be relatively small. Otherwise, for each requested fragment, there would be an idle time equal to the network RTT at the beginning of each fragment.

However, once a request has been sent to the server, it cannot be aborted. So at every time the number of pipelined requests should be limited, because the decision to change representation will put a new request in the pipeline, which will be handled by the HTTP server only once the previous requests are answered.

A preferred implementation of this embodiment will pipeline only one request in advance. Further, the time to send a request for the next fragment will be based on the estimation of time when the reception of the current fragment will be completed. The estimated RTT is subtracted from this time and the next request is sent at that time.

If fragments are much longer than the RTT, bandwidth estimation can be updated during each fragment load and just before the time to send the next request, increasing the chances of taking the decision to change representation before the next fragment.

Figure 4 illustrates an example of a client terminal for receiving a multimedia content according to an embodiment of the disclosure.

As shown in Figure 4, the client terminal CT comprises at least:
- one or more interfaces of connection 41 (wired and/or wireless, as for example Wi-Fi, Ethernet, ADSL, Cable, Mobile and/or Broadcast (e.g. DVB, ATSC) interface);
- a communication module 42 containing the protocol stacks to communicate to the HTTP server SE. In particular the communication module 42 comprises the TCP/IP stack well known in the art. Of course, it could be any other type of network and/or communicating means enabling the client terminal CT to communicate with the HTTP server SE;
- an adaptive streaming module 43 for receiving at least one fragment of a segment, which receives the HTTP streaming multimedia content from the HTTP server SE;
- an expected delivery time module 44 for determining, by considering an available bandwidth along the transmission path:
   ▪ the expected delivery time of all the following fragments of an initial representation of the segment, and
   ▪ the expected delivery time of all the fragments of an alternative representation of the segment;
- a selection module 45 for selecting, by considering the expected delivery times, between:
   ▪ receiving at least one subsequent fragment of the initial representation of the segment; or
   ▪ receiving at least a first fragment of an alternative representation of the segment;
   It continually selects the fragment at the bit-rate that better matches the network constraints and its own constraints;
- a video player 46 adapted to decode and render the multimedia content;
- one or more processors 47 for executing the applications and programs stored in a nonvolatile memory of the client terminal CT;
- storing means 48, such as a volatile memory, for buffering the fragments received from the HTTP server SE before their transmission to the video player 46;
- a bandwidth estimator 49 configured for estimating the bandwidth of the transmission path;
- an internal bus B1 to connect the various modules and all means well known to the skilled in the art for performing the generic client terminal functionalities.

The present disclosure also applies to the use of a protocol version allowing to abort an ongoing request, such as HTTP2.0. While this was not provided with HTTP 1.1 (except by stopping the underlying connection), HTTP2.0 allows to multiplex streams of requests/responses and also provides control messages to drive these streams (notably, the RST command stops an existing stream).

While current state of the art devices work by deciding a representation for one segment and then have to wait until the subsequent segment request to switch to another representation, an alternative embodiment of the present disclosure relies on a method which comprises:
- estimating the available bandwidth at a time scale corresponding to a subdivision of the segments duration;
- deciding at each new estimation to proceed to a change of representation when it is advantageous given the estimated bandwidth (i.e. after a change of bandwidth);
- aborting the reception of the first representation of the segment, currently on reception, when the decision to change has been made (such as the one described with respect to the particular embodiment);
- requesting to the server the sending of a second representation of said segment.

Some of the steps, previously described in reference to the particular embodiment, may also be applied to the method of said alternative embodiment.

As a possible implementation of said alternative embodiment, let be D the segment duration, N a chosen number of targeted checks during one segment (N is for instance comprised between 10 and 20) and S the segment size (in bits). The client terminal implementing the method can re-compute bandwidth when the first of the 2 following events occurs:
- S/N bits have been received since the previous estimation;
- D/N seconds of time have elapsed since the previous estimation.

Moreover, in a refinement of said alternative embodiment, it may be possible to smooth the estimated bandwidth by averaging on a series of "instantaneous" measures. A weighted averaging giving more weight to recent measures is preferred since it better reflects the bandwidth trend.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

As will be appreciated by one skilled in the art, aspects of the present principles can be embodied as a system, method, computer program or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer disc, a hard disc, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. A method for receiving a multimedia content by a client terminal, from at least one server,
wherein the multimedia content is split into at least two successive segments of a first duration, and wherein a segment is associated with at least two representations,
wherein the method comprises:
- receiving (21) at least one fragment of a first representation of a segment, each representation of said segment being split into at least two successive fragments of a second duration;
- determining (22), by considering an available bandwidth along a transmission path between the client terminal and one of the at least one server:
▪ the expected delivery time of all the following fragments of the first representation of said segment, and
▪ the expected delivery time of all the fragments of at least one alternative representation of said segment;
- selecting (23), by considering the expected delivery times, between:
▪ receiving at least one subsequent fragment of the first representation of said segment; or
▪ receiving at least a first fragment of a second representation of said segment, said second representation belonging to said at least one alternative representation.

2. The method according to claim 1, wherein it comprises determining an estimate of said available bandwidth at a time scale corresponding to the second duration.

3. The method according to claim 2, wherein it further comprises determining an estimate of said available bandwidth at a time scale corresponding to the first duration.

4. The method according to any one of claims 2 or 3, wherein said estimate or estimates are each determined either periodically, or after receiving at least one fragment, or after receiving at least one segment, or after detecting a change in the transmission path.

5. The method according to any one of claims 1 to 4, wherein said second representation is associated with a second bit-rate greater than a first bit-rate associated with the first representation, if there is an increase in the available bandwidth.

6. The method according to any one of claims 1 to 4, wherein said second representation is associated with a second bit-rate lower than a first bit-rate associated with the first representation, if there is a decrease in the available bandwidth.

7. The method according to any one of claims 1 to 6, wherein said selecting between receiving at least one subsequent fragment of the first representation or receiving at least a first fragment of the second representation also considers the playback duration of a current content of a buffer of said client terminal.

8. The method according to any one of claims 1 to 7, wherein the determination of the expected delivery times and the selection between receiving at least one subsequent fragment of the first representation or receiving at least a first fragment of the second representation are implemented fragment by fragment.

9. The method according to any one of claims 1 to 8, wherein it comprises sending at least one byte ranges request to said at least one server, in order to receive said at least one fragment.

10. The method according to claim 9, wherein at least one of said byte ranges request is pipelined.

11. The method according to any one of claims 1 to 10, wherein the multimedia content is an HTTP Adaptive Stream.

12. A client terminal (CT) for receiving a multimedia content from at least one server, wherein the multimedia content is split into at least two successive segments of a first duration, and wherein a segment is associated with at least two representations,
wherein the client terminal comprises:
- a module (43) configured to receive at least one fragment of a first representation of a segment, each representation of said segment being split into at least two successive fragments of a second duration;
- a module (44) configured to determine, by considering an available bandwidth along a transmission path between the client terminal and one of the at least one server:
▪ the expected delivery time of all the following fragments of the first representation of said segment, and
▪ the expected delivery time of all the fragments of at least one alternative representation of said segment;
- a module (45) configured to select, by considering the expected delivery times, between:
▪ receiving at least one subsequent fragment of the first representation of said segment; or
▪ receiving at least a first fragment of a second representation of said segment, said second representation belonging to said at least one alternative representation.

13. A computer program product downloadable from a communication network and/or recorded on a medium readable by computer and/or executable by a processor comprising software code adapted to perform a method for receiving a multimedia content by a client terminal, from at least one server,
wherein the multimedia content is split into at least two successive segments of a first duration, and wherein a segment is associated with at least two representations,
wherein the software code is adapted to perform:
- receiving at least one fragment of a first representation of a segment, each representation of said segment being split into at least two successive fragments of a second duration;
- determining, by considering an available bandwidth along a transmission path between the client terminal and one of the at least one server:
▪ the expected delivery time of all the following fragments of the first representation of said segment, and
▪ the expected delivery time of all the fragments of at least one alternative representation of said segment;
- selecting, by considering the expected delivery times, between:
▪ receiving at least one subsequent fragment of the first representation of said segment; or
▪ receiving at least a first fragment of a second representation of said segment, said second representation belonging to said at least one alternative representation.

14. A non-transitory computer-readable medium comprising a computer program product recorded thereon and capable of being run by a processor, including program code instructions for implementing the steps of the receiving method according to at least one of claims 1 to 11.
